# EUROPEAN PATENT SPECIFICATION

(11) **EP 3 692 788 B1**
(45) Date of publication and mention of the grant of the patent: **09.04.2025**
(21) Application number: 20155539.8
(22) Date of filing: 05.02.2020
(51) Int. Cl.: A01K 31/12, A01M 1/06

(54) **PERCH FOR POULTRY, SANITIZATION SYSTEM FOR A PERCH, AND METHOD FOR SANITIZING A PERCH**
STANGE FÜR GEFLÜGEL, DESINFEKTIONSSYSTEM FÜR EINE STANGE, UND VERFAHREN ZUR DESINFEKTION EINER STANGE
PERCHOIR POUR VOLAILLE, SYSTÈME D'ASSAINISSEMENT POUR UN PERCHOIR, ET PROCÉDÉ D'ASSAINISSEMENT D'UN PERCHOIR

(30) Priority: 05.02.2019 NL 2022515
(43) Date of publication of application: 12.08.2020
(73) Proprietor: VDL Jansen B.V., 3771 MB Barneveld (NL)
(72) Inventor: VAN HARSKAMP, Teunis, 6741 ME Lunteren (NL); VERBEEK, Arie, 6741 ME Lunteren (NL)
(74) Representative: Patentwerk B.V.

(56) References cited:
- WO-A1-2007/006423
- GB-A- 191 010 095
- US-A- 1 557 236

## Description

The present invention relates to a novel design for a perch for poultry on which the presence of poultry mite can be decreased. The invention also relates to a method for sanitizing an accommodation for poultry and a sanitization system.

The poultry mite (*Dermanyssus gallinae,* also called the red mite) is the most significant pest in the poultry industry. This pest causes considerable damage in poultry farming and affects the health and well-being of people and animals. In professional poultry farming in the Netherlands, the damage is valued at around €11.5 million per year due to production losses and countermeasure costs. To safeguard the production and the well-being and health of poultry, it is important to combat and to control poultry mite.

The use of pesticides is of only limited effectiveness in practice, since the mites spend most of the day in holes and cracks, and the likelihood of effective contact with the pesticide is therefore low. Furthermore, the mite quickly develops resistance to pesticides, and the use of relatively strong pesticides is a threat to public health and thus undesirable.

For this reason, practical methods are sought in the industry that make it possible physically to repel or to eliminate poultry mite from locations where poultry spend the most time in a poultry shed, such as the perches for poultry. On perches, the risk of poultry mite visiting the poultry is relatively high: for most of the day the poultry mite hide in dark corners and gaps in the perches or the supporting structures thereof, while often at night, when the poultry are roosting on the perch and it is dark, the poultry mite move onto the poultry and feed parasitically on the poultry's blood.

Examples of perches according to the prior art described in US 1557236 A, WO 2007/006423 A1 and GB 10095 A. US 1557236 A relates to a poultry perch comprising a cylindrical open ended body, wherein the perch is provided with longitudinal openings which facilitate the entrance of insects. WO 2007/006423 A1 relates to a method for controlling the red bird mites in birds, by providing a seat element for the birds which contains cavities with openings to the outside configured such that the red bird mites can pass to the bird via the seat member, in which the red bird mites located in the cavities are killed in a suitable manner. GB 10095 A relates to a perch for trapping of parasite in a chamber, wherein the perch has one part provided with a trapping chamber and holes therefrom to the exterior and the other part is provided with an undercut projection engaging a corresponding groove or a portion of the chamber in the first part.

Physically removing poultry mite from a poultry shed daily at an effective time is therefore in principle of interest as a method for further limiting the risk to the poultry. In practice, there is a need in this context for a practical, workable method that is economically attractive for implementation in a poultry shed which houses a great many metres of perches.

The object of the invention is therefore to develop an economically attractive and effective method for ridding poultry of poultry mite. In particular, the object of the invention is to provide a perch that is specifically designed to allow the method to be applied, wherein the perch preferably forms part of a sanitization system for carrying out this method. It is additionally important for the sanitization method according to the invention to trouble or to disturb the poultry as little as possible.

Although the measures according to the invention are primarily designed for combating poultry mite, it is also possible for these measures to be used against other parasites, preferably against parasites that exhibit similar behaviour.

According to a first aspect of the invention, this objective is achieved by providing a perch for poultry to be placed in a room for accommodating poultry, according to appended claim 1. The perch according to the invention comprises at least one elongated tube with an inner chamber allowing flow-through, which tube is provided with a series of access channels that run between the outside of the tube and the inner chamber of the tube. The tube's inner chamber allowing flow-through may be connected to the intake connection of an air pump.

To keep the perches managable during installation and to prevent sagging, the perch comprises at least two tubes that are positioned in line with one another, the inner chambers of which are connected to one another by a joining piece that extends on the outside of the tubes and joins both tubes together with a substantially airtight seal, which substantially airtight seal is formed by the joining piece having opposite end segments which fit onto the ends of the two tubes in a clamping manner.

The substantially airtight seal makes it possible to remove the poultry mites from the interior of the tube by means of air movement.

This measure provides the poultry mite with the opportunity to hide during the day in small chambers, such as the interior of the tube. It is then straightforward to remove the populations of poultry mite or other parasites from the interior of the tube.

Preferably, the access channels have a smallest cross section of between 1 and 10 mm² and the access channels are arranged in the tube according to a regular pattern. Most preferably, the access channels are round and have a diameter of 3 mm. In this way, the poultry mite are given a sufficient degree of access to the interior of the tube, thus preventing the poultry mite from hiding elsewhere in the room in which the poultry are accommodated. The number of access channels per length of tube is chosen according to the specific situation.

Preferably, the wall thickness of the tube is between 0.8 mm and 1.5 mm, and is most preferably 1.25 mm. In this way, the tube is sturdy enough for catchers to stand on during catching of the poultry and the access channel is long enough for the interior of the tube to provide the poultry mite with sufficient shelter. These dimensions assume a steel embodiment of the tube. It is however highly conceivable for the tube to be made of plastic, in which case a greater wall thickness is necessary, possibly even up to 5 mm.

The access channels may be arranged at the same distance from one another, but it is advantageous for the access channels to be positioned in proximity to the mounting points of the perches. When, in the dawn twilight, the poultry mites seek a place to hide, they will move to the mounting points and pass the access channels.

To clarify, it should be noted that the access channel is aimed at luring in poultry mite or another parasite, since poultry mite naturally seek out a dark hiding place, such as the interior of the perch. Indeed, there is no more attractive hiding place for the poultry mite on the perch than the inner chamber of the tube openings in the tube accessed through the access channels. To increase the attractiveness for the poultry mite, pheromones may be applied in the hiding place. Once the mite is in its hiding place, the inner chamber of the perch can be sucked clear by a sanitation system discussed below and the poultry mite thereby removed.

It is also advantageous for the tube to be provided with sloping surfaces that face outwards in the downwards direction and for the access channels to be configured as openings arranged in the narrow, sloping surfaces of the tube. In this way, the blocking of the access channels by the poultry's droppings is prevented. Additionally and preferably, the tube has a cross section in the shape of an isosceles triangle with rounded corners, the tube is positioned with the widest side facing upwards and the access channels are configured as openings arranged in the narrow, sloping surfaces of the tube. The width of the tube provides the poultry with sufficient comfort for their feet when perching and the sloping sides remain mostly in the shade, so that the interior of the tube is dark. However, the tube may take another shape, such as a round, elliptical or mushroom shape.

To remove the poultry mites, it is advantageous for a first end of the perch to comprise a connecting piece that is configured for connection to a suction air pump. By switching on the air pump, an airflow that carries the poultry mites along with it can be created in the interior of the tube.

To obtain a high airspeed in the tube, which is desirable for carrying the poultry mite away, the tubes are preferably connected to the air pump in succession. According to a preferred embodiment, the connecting piece is therefore provided with a controllable valve.

The invention also relates to a sanitization system according to claim 7 for a poultry accommodation, comprising at least one perch of the abovementioned type, wherein the connecting piece of each perch is connected to a central discharge line and wherein the central discharge line is connected downstream to a pump that is configured to create a reduced pressure in the discharge line. As a result, an airflow is created that carries the poultry mites along with it from the inside of the perch to a treatment room via the central discharge line.

As an alternative to the local valves that are each connected to a perch as described above, it is also possible for the intake side of the air pump to be connected to a common outlet connection of a controllable multiway valve and for the inlet connections of the multiway valve each to be connected to a perch. This embodiment affords the possibility of the valve being sited in a central location.

A special measure proposes a sanitization system of the type described above, wherein a main valve is provided on the central discharge line, upstream from the treatment chamber, and wherein an overpressure line is connected to the central discharge line via a return valve so as to create an increased pressure in the perch.

For the sake of clarity, it should be noted that, in the context of the invention, the terms "downstream" and "upstream" refer to the direction of the extracting airflow that flows from the perch to the treatment chamber, and ultimately the pump, via the central discharge line.

The invention also relates to a method according to claim 11 for sanitizing an accommodation for poultry that is provided with a sanitization system of the abovementioned type, wherein a reduced pressure is created in the interior of the perch by the pump and the poultry mite present in the interior of the perch is carried along thereby.

A preferred embodiment proposes a method wherein the end of the perch opposite the connected end is provided with a controllable shut-off valve, and pumping is initially effected with the shut-off valve closed and the shut-off valve is subsequently opened.

In this way, the population of poultry mite that is present in the joining piece and around the access channel is first sucked further into the inner chamber of the perch, wherein a relatively low extraction speed prevails in the inner chamber of the perch itself and the poultry mite remains in the tube. Next, after the end valve has been opened, a higher extraction speed is created in the inner chamber of the perch, by means of which all poultry mite present are sucked away to the treatment chamber via the central discharge line.

The invention will the explained in greater detail below by means of a specific embodiment of the invention as is illustrated in the appended figures, which show:
- Fig. 1:: an arrangement of several perches according to an embodiment;
- Fig. 2A:: a detail of the structure of a perch at the location of a joining piece;
- Fig. 2B:: a longitudinal section through the joining piece from Fig. 2A;
- Fig. 3:: a flow diagram of the sanitization system according to an embodiment;
- Fig. 4:: a sectional view of a perch according to an alternative embodiment;
- Fig. 5:: a perspective, schematic view of the perch shown in Fig. 4;
- Fig. 6:: a sectional view of a perch and a support therefor; and
- Fig. 7:: a sectional view of a multiway valve for use with the invention.

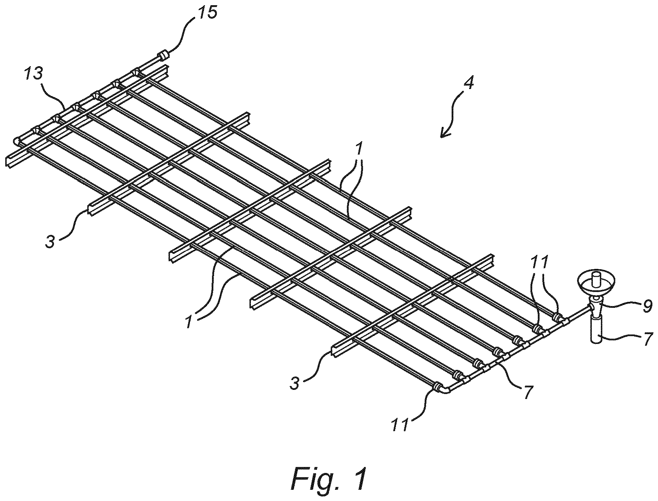

Figure 1 shows seven perches 1 arranged in parallel that are supported as a group by a number of transverse profiles 3. The perch is of modular construction, constructed from a series of consecutive tubes, and typically has a total length of 40 metres. The assembly 4 forms for example an uppermost storey in a conventional aviary system or colony system in a poultry shed. A first end of the perches is connected to a central discharge line 7 that leads to a main valve 9. After this main valve 9, the line 7 continues on to a treatment device (not shown) for treating poultry mite and an air pump. Each first end of a perch is additionally provided with a remote-controlled valve 11. The second ends of the perches 5 connect to an end line 13 with an end valve 15. Incidentally, it is possible for the main valve 9 to be omitted.

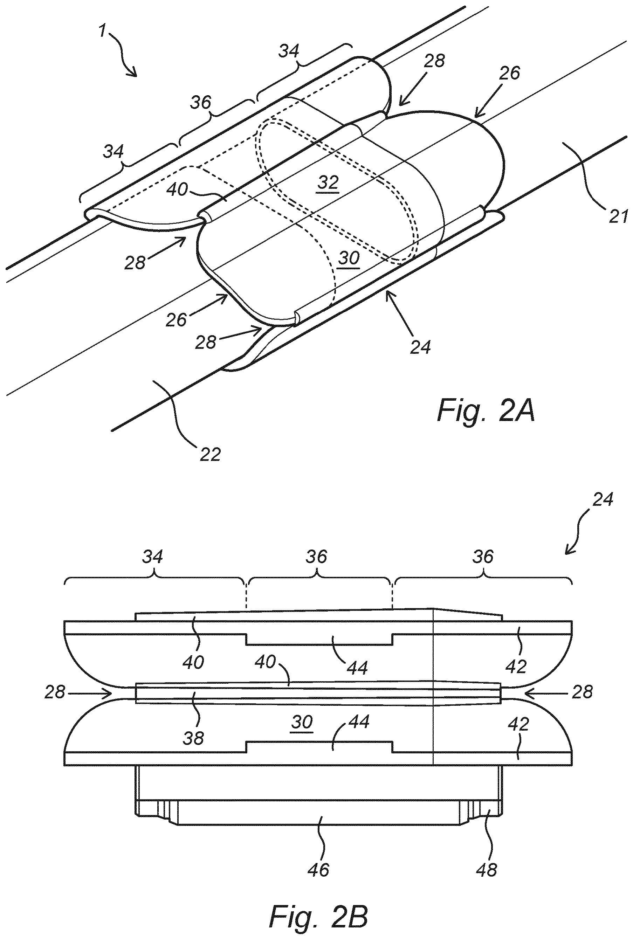

Figure 2A shows a detail of the structure of a perch 1 from Fig. 1, namely the connection of two consecutive ends of adjacent tubes 21 and 22 by means of a tubular joining piece 24, which is shown as being see-through for the sake of clarity of the drawing but which in reality is not transparent. The tubular joining piece 24 comprises opposite end segments 34 which fit onto the ends of the adjacent tubes 21 and 22 in a clamping manner, forming a substantially airtight seal. The joining piece comprises a middle segment 36 between the end segments 34 which determines a distance between the reciprocal ends of the adjacent tubes 21, 22, for which the inside of the middle segment 36 is provided with a stop profile. The edges 26 of the joining piece have a tapering profile, which narrows in the direction of a relatively small entrance 28 into the access channel. The access channel runs from the entrance 28 into the inner chamber 30 of the joining piece, which is in open communication with the inner chamber 32 of the tubes 21 and 22. The two entrances 28 into the access channel shown on the top side are bounded by a sleeve 40. The joining piece 24 is thus provided with entrances 28 into an access channel on multiple sides. Poultry mite present on the perch will, in the situation shown, be tempted to make use of the entrances 28 into the access channel in order to hide in the dark interior of the perch 1.

Figure 2B shows a longitudinal section through the joining piece shown in Fig. 2A, wherein identical components are denoted by the same reference numbers. The inner wall 42 of the joining part 24 is made thicker in the middle segment 36 so as to form a stop body 44, against which the reciprocal ends (not shown) of the adjacent tubes butt. The length of the stop body 44 thus determines the distance between the two reciprocal ends of the adjacent tubes which are connected by the joining part.

An elongated groove 38 is present as the access channel between the two entrances 28, which are surrounded by sleeve 40. When the respective ends of connected tubes are inserted into the respective end segments 34, the groove 38 will be in open communication with the inner chamber 30 of the joining piece 24 at the location of the middle segment 36, and thus the access channel 38 will run from the outside of the joining piece to an inner chamber of the joining piece. The channel 38 thus allows an airflow between the outside of a perch and the inner chamber of a perch.

The underside of the joining piece is provided with a profile 48 combined with a small steel tube 46 that acts as a reinforcing structure for the joining piece. The small tube 46 bridges the middle segment 36 and thus forms a rigid bridging part between the two ends of tubes that are connected to the two respective end segments 34. This reinforcing structure makes it possible for the rest of the joining piece to be formed from an elastomer which is advantageous for contacting tubes in a clamping manner, while the joining piece as a whole provides sufficient rigidity and strength as a component of the perch.

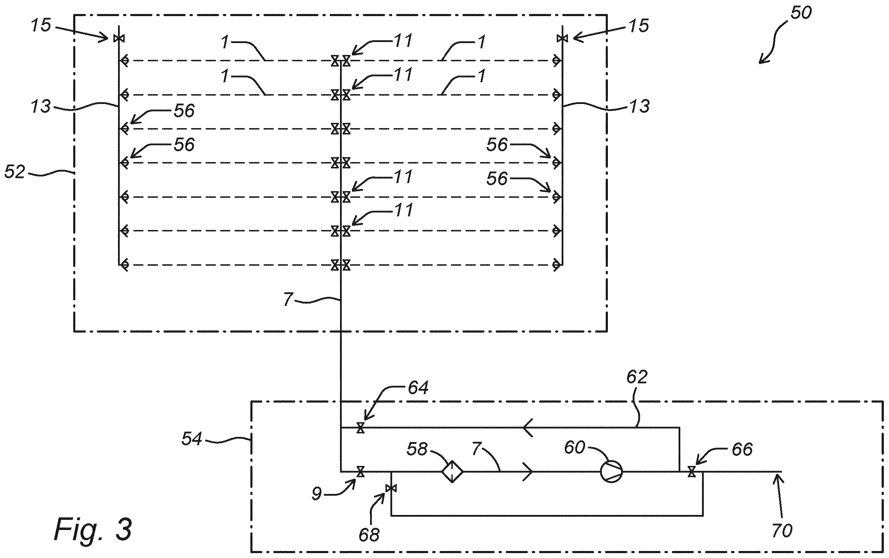

Figure 3 shows a flow diagram of the sanitization system 50 according to an embodiment. A first part 52 of the sanitization system is arranged in a poultry shed and consists of seven perches 1 which are connected to a central discharge line 11 by a first end. Insofar as they correspond to the representation in Figure 1, identical components are illustrated with the same reference numbers, including the end line 13 with end valve 15, and the valves 11 of the perches. The second end of each perch 1 that is connected to the end line 13 is additionally provided with a non-return valve 56, which allows only an outflow of air from the end line 13 into the perch 1 and thus prevents a reverse airflow from the perch 1 to the end line 13. Inside the second part 54 of the sanitization system, which is optionally arranged outside the poultry shed, the discharge line 7 leads, after passing main valve 9, through a cyclone filter 58, which also acts as a treatment chamber for killing poultry mite. To this end, the cyclone 58 is provided with features for subjecting the poultry mite to a treatment, such as exposure to hot air, hot water, electricity, UV radiation, water and soap or pesticides, or a combination thereof. Depending on the required capacity of the sanitization system, additional cyclones may be arranged in series with cyclone 58, which may or may not be provided with the abovementioned features.

The discharge line 7 then leads to a pump 60 for creating a reduced pressure in the discharge line 7. The pump 60 creates an extracting airflow from the inside of a selected perch 1, the valve 11 of which is opened, to the treatment chamber 58 via the central discharge line 7. Behind the pump 60, the pumped-out air is passed into the outside air via end 70 of line 7. When applying a reduced pressure in the sanitization system, the non-return valves 56 close those perches, the valves 11 at the first end of which are not open, off at the other, second end too, such that the reduced pressure can only be present in a selected perch.

Downstream of the pump 60, an overpressure line 62 is provided which is connected to the return valve 64, so as to be able to create a reverse, expelling airflow in the first part of the sanitization system 52 with perches. By closing the main valve 9 and the first auxiliary valve 66, and opening second auxiliary valve 68, air is drawn in from the end 70 in order to purge the sanitization system using pump 60 via return valve 64.

The above sanitization system provides an adequate and practical means for the periodic, and preferably daily, removal of poultry mite from perches.

The joining pieces 24 between the tubes 21, 22 of a perch 1 provide a hiding place for poultry mite during (day)light hours in the poultry shed. The pump 60 is activated at least once a day, whereby a reduced pressure is created in the inner chamber of the perch so that as many mites as possible in the vicinity of the entrances 28 into the access channels are sucked into the inner chamber, where a considerable number of poultry mites are already hiding. By then opening the end valve 15, a stronger extracting airflow can be created, by means of which the poultry mite are carried into the treatment chamber, in this case cyclone 58, via the discharge line 7, where they are killed. After these actions, the majority of poultry mite have been removed from the perches, and the health risk to the poultry has been greatly reduced.

It is furthermore possible within this system for the removal of poultry mite to be carried out per individual perch, and for this to be carried out on a timer and to be automated.

Once all of the perches have been sanitized, a brief, sharp expelling airflow can be sent through each perch by the pump 60 via overpressure line 62 and by opening return valve 64. This step is intended to prevent the access channels 38 from becoming clogged or blocked in any way by sticky substances such as poultry droppings. Such a system may be self-cleaning, and thus requires little maintenance. The non-return valves 56 ensure that the expelling air flow escapes only via the access channels 38, and thus that a sharp, effective airflow is obtained so as to purge the access channels 38.

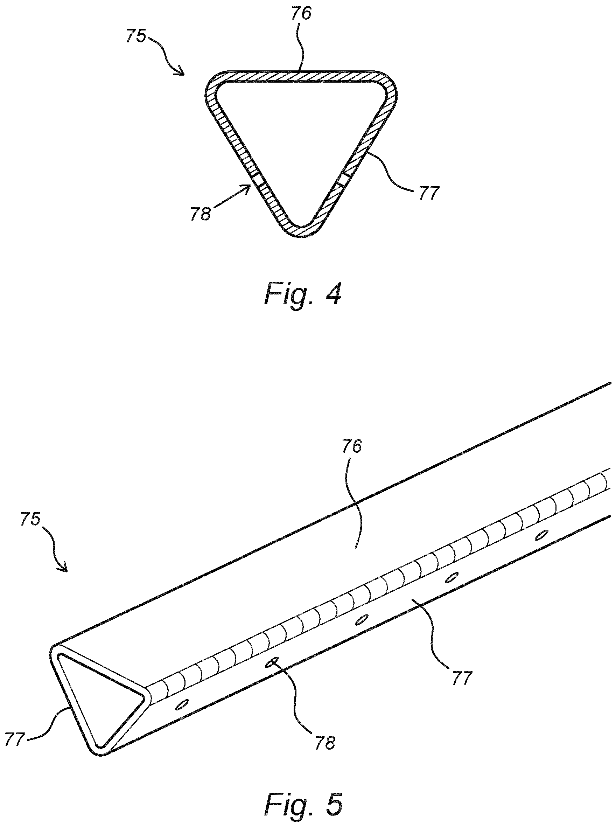

Figure 4 shows a sectional view of an alternative embodiment of a tube of a perch according to the invention. The tube 75 has a cross section in the shape of an isosceles triangle, the long side 76 of which faces upwards. The corners are rounded. In this way, a comfortable perching surface for the poultry is formed. The tube 75 is made of galvanized steel sheet, for example by rolling and welding. Openings 78, which serve as access channels, are arranged at regular distances from one another in the sloping, downward facing surfaces 77 of the profile. Figure 5 shows the same profile in perspective. Incidentally, for the poultry's comfort, it is preferable for the width of the upper surface of the tube to be at least 30 mm.

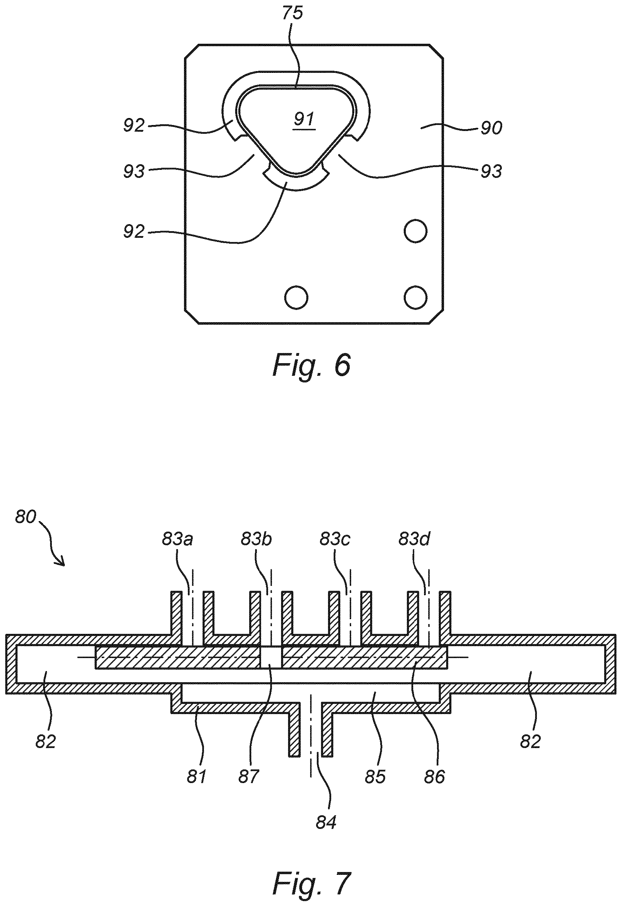

Figure 6 shows a sectional view of a tube 75, which is placed on a supporting plate 90 belonging to a frame. The supporting plate 90, which is preferably made of metal, is provided with an opening 91 in the shape of the tube 75, but of larger size so that a gap 92 is formed between the tube 75 and the supporting plate 90. However, the tube 75 rests on two tongues 93 arranged in the opening 91. The gap prevents the poultry mite from reaching the plate easily, so that they remain instead on the tube and go through the access channels 78 to seek refuge in the interior of the tube 75. The supporting plate 90 is additionally provided with a number of openings for securing the supporting plate to the frame of the perch unit for the poultry.

Figure 7 shows a sectional view of an exemplary embodiment of a central controllable multiway valve 80. This multiway valve 80 comprises an elongated substantially rectangular housing 81, which is provided with an extension 82 at both ends. The housing 81 is provided on a first side with four connectors 83 to which the connections to the perches can be connected. A connector 84 for the pump is arranged on the opposite side. This connector leads to a chamber 85 of the housing 81. A valve body 86 is arranged in the housing 81, which valve body is movable in the longitudinal direction of the housing 81. An opening 87 is arranged in the valve body 86, which will connect the chamber 85 to the chosen connector 83. The valve body 86 can be driven in the direction of movement by a drive element (not shown in the drawing), such as an electromagnet or another linear drive member. It will be clear that, instead of the multiway valve shown, other types of multiway valves may be used.

## Claims

1. Perch (1) for poultry to be placed in a room for accommodating poultry, comprising at least one elongated tube (21, 22, 75) with an inner chamber (32) allowing flow-through, comprising a series of access channels (38, 78) that run between the outside of the tube (21, 22, 75) and the inner chamber (32) of the tube (21, 22, 75),
**characterized in that** the perch (1) comprises at least two tubes (21, 22) that are positioned in line with one another, the inner chambers (32) of which are connected to one another by a joining piece (24) that extends on the outside of the tubes (21, 22) and joins both tubes (21, 22) together with a substantially airtight seal, which substantially airtight seal is formed by the tubular joining piece (24) having opposite enc segments (34) which fit onto the ends of the two adjacent tubes (21,22) in a clamping manner.

2. Perch (1) according to Claim 1, **characterized in that** the access channels (38, 78) have a smallest cross section in the range from 1 to 10 mm² and the access channels (38, 78) are arranged in the tube (21, 22, 75) according to a regular pattern.

3. Perch (1) according to Claim 1 or 2, **characterized in that** the wall thickness of the tube (21, 22, 75) is between 0.8 mm and 1.5 mm.

4. Perch (1) according to one of Claims 1, 2 or 3, **characterized in that** the tube (21, 22, 75) is provided with sloping surfaces (77) that face outwards in the downwards direction and **in that** the access channels (38, 78) are configured as openings (78) arranged in the narrow, sloping surfaces (77) of the tube (21, 22, 75), wherein the tube (21, 22, 75) has a cross section in the shape of an isosceles triangle with rounded corners, and **in that** the tube (21, 22, 75) is positioned with the widest side facing upwards.

5. Perch (1) according to one of the preceding claims, **characterized in that** a first end of the perch (1) comprises a connecting piece that is configured for connection to the intake connection of an air pump.

6. Perch (1) according to Claim 5, **characterized in that** the connecting piece is provided with a controllable valve.

7. Sanitization system (50) for a poultry accommodation, comprising at least one perch (1) according to one of Claims 5 or 6, **characterized in that** the connecting piece of each perch (1) is connected to a central discharge line (7), and **in that** the central discharge line (7) is connected downstream to an air pump (60) that is configured to create a reduced pressure in the discharge line (7).

8. Sanitization system according (50) to Claim 7, **characterized in that** the intake side of the air pump (60) is connected to a common outlet connection of a central controllable multiway valve (80), and **in that** the inlet connections of the central multiway valve (80) are each connected to a perch (1).

9. Sanitization system (50) according to Claim 7 or 8, wherein a treatment chamber (58) is placed on the central discharge line (7) for subjecting the poultry mite that have been carried along the discharge line (7) to a treatment.

10. Sanitization system (50) according to Claim 9, wherein a main valve (9) is provided on the central discharge line (7), upstream from the treatment chamber (58), and wherein an overpressure line (62) is connected to the central discharge line (7) via a return valve (64) so as to create an increased pressure in the perch (1).

11. Method for sanitizing an accommodation for poultry that is provided with a sanitization system (50) according to one of Claims 7-10, **characterized in that** a reduced pressure is created in the interior of the perch (1) by the pump (60) and the poultry mite present in the interior of the perch (1) is carried along thereby.

12. Method according to Claim 11, wherein the end of the perch (1) opposite the first end which comprises the connecting piece, is provided with a controllable shut-off valve and pumping is initially effected with the shut-off valve closed and the shut-off valve is subsequently opened.

## Patentansprüche

1. Sitzstange (1) für Geflügel, die in einem Raum zum Unterbringen von Geflügel platziert wird, umfassend mindestens ein längliches Rohr (21, 22, 75) mit einer Innenkammer (32), die einen Durchfluss ermöglicht, umfassend eine Reihe von Zugangskanälen (38, 76), die zwischen der Außenseite des Rohrs (21, 22, 75) und der Innenkammer (32) des Rohrs (21, 22, 75) verlaufen,
**dadurch gekennzeichnet, dass** die Sitzstange (1) mindestens zwei Rohre (21, 22) umfasst, die in einer Linie zueinander positioniert sind, deren Innenkammern (32) miteinander durch ein Verbindungsstück (24) verbunden sind, das sich auf der Außenseite der Rohre (21, 22) erstreckt und beide Rohre (21, 22) mit einer im Wesentlichen luftdichten Dichtung miteinander verbindet, wobei die im Wesentlichen luftdichte Dichtung dadurch gebildet wird, dass das rohrförmige Verbindungsstück (24) gegenüberliegende Endsegmente (34) aufweist, die auf die Enden der beiden benachbarten Rohre (21, 22) durch Klemmung passen.

2. Sitzstange (1) nach Anspruch 1, **dadurch gekennzeichnet, dass** die Zugangskanäle (38, 76) einen kleinsten Querschnitt in dem Bereich von 1 bis 10 mm² aufweisen und die Zugangskanäle (38, 76) in dem Rohr (21, 22, 75) nach einem regelmäßigen Muster angeordnet sind.

3. Sitzstange (1) nach Anspruch 1 oder 2, **dadurch gekennzeichnet, dass** die Wandstärke des Rohrs (21, 22, 75) zwischen 0,8 mm und 1,5 mm beträgt.

4. Sitzstange (1) nach einem der Ansprüche 1, 2 oder 3, **dadurch gekennzeichnet, dass** das Rohr (21, 22, 75) mit Schrägflächen (77) bereitgestellt ist, die nach außen in der Abwärtsrichtung zeigen, und dass die Zugangskanäle (38, 75) als Öffnungen (78) konfiguriert sind, die in den schmalen Schrägflächen (77) des Rohrs (21, 22, 75) angeordnet sind, wobei das Rohr (21, 22, 75) einen Querschnitt in Form eines gleichschenkligen Dreiecks mit abgerundeten Ecken aufweist, und dass das Rohr (21, 22, 75) mit der breitesten Seite nach oben positioniert ist.

5. Sitzstange (1) nach einem der vorstehenden Ansprüche, **dadurch gekennzeichnet, dass** ein erstes Ende der Sitzstange (1) ein Verbindungsstück umfasst, das dazu konfiguriert ist, mit dem Ansauganschluss einer Luftpumpe verbunden zu werden.

6. Sitzstange (1) nach Anspruch 5, **dadurch gekennzeichnet, dass** das Verbindungsstück mit einem steuerbaren Ventil bereitgestellt ist.

7. Desinfektionssystem (50) für eine Geflügelunterkunft, umfassend mindestens eine Sitzstange (1) nach einem der Ansprüche 5 oder 6, **dadurch gekennzeichnet, dass** das Verbindungsstück jeder Sitzstange (1) mit einer zentralen Abflussleitung (7) verbunden ist und dass die zentrale Abflussleitung (7) stromabwärts mit einer Luftpumpe (60) verbunden ist, die dazu konfiguriert ist, einen reduzierten Druck in der Abflussleitung (7) zu erzeugen.

8. Desinfektionssystem (50) nach Anspruch 7, **dadurch gekennzeichnet, dass** die Ansaugseite der Luftpumpe (60) mit einem gemeinsamen Auslassanschluss eines zentralen steuerbaren Mehrwegeventils (80) verbunden ist und dass die Einlassanschlüsse des zentralen Mehrwegeventils (80) jeweils mit einer Sitzstange (1) verbunden sind.

9. Desinfektionssystem (50) nach Anspruch 7 oder 8, wobei eine Behandlungskammer (58) an der zentralen Abflussleitung (7) angeordnet ist, um die entlang der Abflussleitung (7) transportierten Geflügelmilben einer Behandlung zu unterziehen.

10. Desinfektionssystem (50) nach Anspruch 9, wobei ein Hauptventil (9) an der zentralen Abflussleitung (7) stromaufwärts von der Behandlungskammer (58) bereitgestellt ist und wobei eine Überdruckleitung (62) mit der zentralen Abflussleitung (7) über ein Rückschlagventil (64) verbunden ist, um einen erhöhten Druck in der Sitzstange (1) zu erzeugen.

11. Verfahren zum Desinfizieren einer Unterkunft für Geflügel, die mit einem Desinfektionssystem (50) nach einem der Ansprüche 7 bis 10 bereitgestellt ist, **dadurch gekennzeichnet, dass** ein reduzierter Druck in dem Inneren der Sitzstange (1) durch die Pumpe (60) erzeugt wird und die in dem Inneren der Sitzstange (1) vorhandene Geflügelmilbe dadurch mitgerissen wird.

12. Verfahren nach Anspruch 11, wobei das Ende der Sitzstange (1), das dem ersten Ende gegenüberliegt, welches das Verbindungsstück umfasst, mit einem steuerbaren Absperrventil bereitgestellt ist und das Pumpen zunächst bei geschlossenem Absperrventil erfolgt und das Absperrventil anschließend geöffnet wird.

## Revendications

1. Perchoir (1) pour volaille à placer dans une pièce pour accueillir des volailles, comprenant au moins un tube allongé (21, 22, 75) avec une chambre intérieure (32) permettant un flux, comprenant une série de canaux d'accès (38, 76) qui s'étendent entre l'extérieur du tube (21, 22, 75) et la chambre intérieure (32) du tube (21, 22, 75),
**caractérisé en ce que** le perchoir (1) comprend au moins deux tubes (21, 22) qui sont positionnés en ligne l'un avec l'autre, dont les chambres intérieures (32) sont reliées l'une à l'autre par un embout (24) qui s'étend sur l'extérieur des tubes (21, 22) et relie les deux tubes (21, 22) ensemble avec un joint sensiblement étanche à l'air, lequel joint sensiblement étanche à l'air est formé par l'embout tubulaire (24) ayant des segments d'extrémité opposés (34) qui s'adaptent sur les extrémités des deux tubes adjacents (21, 22) par serrage.

2. Perchoir (1) selon la revendication 1, **caractérisé en ce que** les canaux d'accès (38, 76) ont une plus petite section transversale dans la plage de 1 à 10 mm² et les canaux d'accès (38, 76) sont disposés dans le tube (21, 22, 75) selon un motif régulier.

3. Perchoir (1) selon la revendication 1 ou 2, **caractérisé en ce que** l'épaisseur de paroi du tube (21, 22, 75) est comprise entre 0,8 mm et 1,5 mm.

4. Perchoir (1) selon l'une des revendications 1, 2 ou 3, **caractérisé en ce que** le tube (21, 22, 75) est pourvu de surfaces inclinées (77) qui sont tournées vers l'extérieur dans la direction vers le bas et **en ce que** les canaux d'accès (38, 75) sont configurés comme des ouvertures (78) disposées dans les surfaces inclinées étroites (77) du tube (21, 22, 75), dans lequel le tube (21, 22, 75) a une section transversale en forme de triangle isocèle avec des coins arrondis, et **en ce que** le tube (21, 22, 75) est positionné avec le côté le plus large tourné vers le haut.

5. Perchoir (1) selon l'une des revendications précédentes, **caractérisé en ce qu'**une première extrémité du perchoir (1) comprend une pièce de raccordement qui est configurée pour le raccordement au raccordement d'admission d'une pompe à air.

6. Perchoir (1) selon la revendication 5, **caractérisé en ce que** la pièce de raccordement est munie d'une vanne réglable.

7. Système de désinfection (50) pour un logement de volaille, comprenant au moins un perchoir (1) selon l'une des revendications 5 ou 6, **caractérisé en ce que** la pièce de raccordement de chaque perchoir (1) est raccordée à une ligne d'évacuation centrale (7), et **en ce que** la ligne d'évacuation centrale (7) est raccordée en aval à une pompe à air (60) qui est configurée pour créer une pression réduite dans la ligne d'évacuation (7).

8. Système de désinfection (50) selon la revendication 7, **caractérisé en ce que** le côté d'admission de la pompe à air (60) est raccordé à un raccordement de sortie commun d'une vanne à voies multiples centrale réglable (80), et **en ce que** les raccordements d'entrée de la vanne à voies multiples centrale (80) sont chacun reliés à un perchoir (1).

9. Système de désinfection (50) selon la revendication 7 ou 8, dans lequel une chambre de traitement (58) est placée sur la ligne d'évacuation centrale (7) pour soumettre les acariens de volaille qui ont été transportés le long de la ligne d'évacuation (7) à un traitement.

10. Système de désinfection (50) selon la revendication 9, dans lequel une vanne principale (9) est prévue sur la ligne de décharge centrale (7), en amont de la chambre de traitement (58), et dans lequel une ligne de surpression (62) est reliée à la ligne de décharge centrale (7) par l'intermédiaire d'une vanne de retour (64) de manière à créer une pression accrue dans le perchoir (1).

11. Procédé de désinfection d'un logement pour volaille muni d'un système de désinfection (50) selon l'une des revendications 7 à 10, **caractérisé en ce qu'**une pression réduite est créée à l'intérieur du perchoir (1) par la pompe (60) et l'acarien de volaille présent à l'intérieur du perchoir (1) est entraîné par celle-ci.

12. Procédé selon la revendication 11, dans lequel l'extrémité du perchoir (1) opposée à la première extrémité qui comprend la pièce de raccordement, est pourvue d'une vanne d'arrêt réglable et le pompage est initialement effectué avec la vanne d'arrêt fermée et la vanne d'arrêt est ensuite ouverte.
